(19) Europäisches Patentamt / European Patent Office / Office européen des brevets

(11) **EP 1 857 242 B1**

(12) # EUROPÄISCHE PATENTSCHRIFT

(45) Veröffentlichungstag und Bekanntmachung des Hinweises auf die Patenterteilung:
**28.08.2013 Patentblatt 2013/35**

(21) Anmeldenummer: **06733211.4**

(22) Anmeldetag: **15.02.2006**

(51) Int Cl.:
*B29B 9/06* (2006.01)          *B29C 44/34* (2006.01)
*B29C 67/20* (2006.01)

(86) Internationale Anmeldenummer:
**PCT/RU2006/000075**

(87) Internationale Veröffentlichungsnummer:
**WO 2006/088392 (24.08.2006 Gazette 2006/34)**

(54) **VERFAHREN ZUM HERSTELLEN VON EXPANDIERFÄHIGEM STYROLKUNSTSTOFF-GRANULAT**

METHOD FOR PRODUCING EXPANDING STYRENE POLYMER GRANULES

PROCEDE DE FABRICATION DE GRANULES D'UN POLYMERE STYRENE MOUSSANT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.02.2005 RU 2005105495**

(43) Veröffentlichungstag der Anmeldung:
**21.11.2007 Patentblatt 2007/47**

(73) Patentinhaber: **Sulzer Chemtech AG**
**8404 Winterthur (CH)**

(72) Erfinder:
• GINZBURG, Leonid Isaakovich
  D-Duesseldorf, 40477 (DE)
• TARKOVA, Eugenia Michailova
  St. Petersburg, 195427 (RU)
• ROGOV, Maxim Nikolaevich
  Salavat, 453250 (RU)
• RAHIMOV, Halyl Halafovichul. Mostova, 26
  Salavat, 453250 (RU)
• ISHMIJAROV, Marat Hafisovich
  Salavat, 453250 (RU)
• MJACHIN, Sergei Ivanovich
  Salavat, 453250 (RU)
• PROKOPENKO, Alexej Vladimirovich
  Salavat, 453250 (RU)
• KRASHENINNIKOV, Alexandr Alexeevich
  St. Petersburg, 191040 (RU)
• MJASITSHEVA, Irina Vladimirovna
  St. Petersburg, 197002 (RU)

(74) Vertreter: **Sulzer Management AG**
**Patentabteilung / 0067**
**Zürcherstrasse 14**
**8401 Winterthur (CH)**

(56) Entgegenhaltungen:
EP-A1- 0 668 139     EP-A2- 0 445 847
GB-A- 1 062 307      RU-C1- 2 151 153
SU-A1- 1 381 126     US-A- 3 817 669

**Beschreibung**

Die Erfindung betrifft das Gebiet der Polymerchemie, insbesondere das der Herstellung von expandierfähigem Polystyrol (EPS), wie etwa von Styrolpolymeren, welche ein Treibmittel (TM) einschließen. EPS ist zur Schaumbildung bei Erhitzung fähig. Dabei entsteht ein als Schaumpolystyrol (SPS) genannter poröser Werkstoff. SPS findet eine breite Anwendung in verschiedenen Industriezweigen. Beispielsweise werden Platten aus SPS im Bauwesen als Wärme- und Schallisolierung verwendet. Ebenso werden aus SPS Verpackungen für verschiedene Gebrauchszwecke hergestellt, wie etwa Vollverpackungen und Formprofile zur Beförderung von Geräten. SPS kann auch als Schienenpolster und dergleichen Verwendung finden.

Für jede Anwendung ist SPS mit bestimmten physikalisch-mechanischen Eigenschaften erforderlich. Für die physikalisch-mechanischen Eigenschaften ist die Schüttdichte des Schaumerzeugnisses maßgeblich. So sollen Platten, die als Schienen- und Straßenbahnschienenpolster verwendet werden, eine Schüttdichte von mindestens 35 kg/m$^3$, besser von mindestens 45 kg/m$^3$ aufweisen. Platten, welche im Bauwesen Verwendung finden, weisen eine Schüttdichte von 25-35 kg/m$^3$ auf. SPS-Verpackungen sind gewöhnlich sehr leicht, mit einer Schüttdichte von 12-20 kg/m$^3$. Maßgebend ist somit für den Verbraucher die Schüttdichte der Schaumpolystyrolerzeugnisse, welche aus dem expandierfähigen Polystyrol hergestellt sind.

Es ist bekannt, SPS durch ein Strangpressverfahren herzustellen. Dabei wird das Polystyrol in einer Spritzmaschine geschmolzen. Das TM und andere Zusatzstoffe werden in den Schmelzfluss eingeführt und das Schaumerzeugnis extrudiert. Ein derartiges Strangpressverfahren von SPS ist aus EP 0445847 A2 bekannt. Dabei wird Polystyrol in einer Schmelzzone einer Spritzmaschine geschmolzen. Es wird ein TM verwendet aus der Gruppe modifizierter Kohlenwasserstoffe mit verschiedener Zusammensetzung, welche Grenzkohlenwasserstoffe mit einer Kettenlänge von C$_2$ - C$_3$, Kohlensäuregas oder eine Mischung hieraus umfasst. Die Polymerschmelze wird mit dem TM in der Schmelzzone gemischt. In einer Kühlzone erfolgt eine Abkühlung der Mischung und anschließend durch Extrusion die Herstellung eines Schaumerzeugnisses. Die Oberflächenbeschaffenheit des Schaumerzeugnisses wird bei diesem Verfahren durch Aufrechterhaltung eines Druckunterschieds zwischen Eintritt in die Mischzone und Düsenloch der Spritzmaschine innerhalb eines bestimmten Bereichs kontrolliert.

Zum Herstellen von SPS mittels Strangpressverfahren sind nur bestimmte Polystyrole mit einer innerhalb eines engen Bereichs liegenden molekularen Masse mit einer kleinen Schmelzfließindex (MFI) des Schmelzgutes (MFI g/10 Minuten) geeignet. Derart enge, durch die Anforderungen des Strangpressverfahrens zur Schaumbildung bedingte Eigenschaften des verwendbaren Polystyrols schränken das Angebot der herstellbaren Schaumerzeugnisse ein und erhöhen deren Herstellungskosten. Insbesondere ist es praktisch nicht möglich, durch Strangpressverfahren leichte Schaumerzeugnisse mit einer Schüttdichte von weniger als 30 kg/m$^3$ herzustellen. Eine weitere Einschränkung beim Strangpressverfahren besteht in der eingeschränkten Produktvariabilität. So können beispielsweise nur Erzeugnisse in Form von Folien, Blättern, Platten, Profile und dergleichen mit einer Stärke von höchstens 50 cm hergestellt werden.

Sollen leichte Schaumerzeugnisse anderer Form hergestellt werden, wird ein EPS benötigt, welches durch Kornpolymerisation von Styrol unter Zusatz von Perlen eines Polymeres und TM in der Polymerisationsphase hergestellt worden ist. Solche als Suspensionsverfahren bekannte Verfahren zur Erzeugung von EPS sind beispielsweise durch JP 491141 US 5,240,967, RU 2087486 C1, FR 2725995 A1, US 5,616,413, DE 19548311 A1, DE 19642658 A1, FR 2820427 A1 bekannt. Dadurch können Polymere mit verhältnismäßig niedriger molekularer Masse von weniger als 200000 und mit einer Schmelzfließindex (MFI) des Schmelzguts von 3 und höher hergestellt werden. Aus dem expandierfähigen Suspensionspolystyrol können Schaumerzeugnisse verschiedener Form mit einer Schüttdichte von 25 kg/m$^3$ und weniger hergestellt werden.

Jedoch ist die Herstellung von Platten bzw. von Erzeugnissen mit hoher Dichte aus expandierfähigem Suspensionspolystyrol unverhältnismäßig aufwändig. Dies sowohl in Bezug auf den Werkstoffverbrauch an expandierfähigem Polystyrol, als auch in Bezug auf den Energieverbrauch für dessen Verarbeitung. Diese Unverhältnismä-ßigkeit wird dadurch verstärkt, dass es praktisch unmöglich ist, bei der Herstellung von Erzeugnissen aus expandierfähigem Suspensionspolystyrol die Qualität von durch Extrusion hergestelltem SPS zu erreichen.

Außerdem verursacht das Suspensionsverfahren große Mengen von zu reinigendem Abwasser. Die Perlen des durch ein Suspensionsverfahren hergestellten EPS weisen eine breite granulometrische Verteilung bzw. eine große Streuung ihres Durchmessers auf. Zur Herstellung von Schaumerzeugnissen werden jedoch nur Perlen aus EPS mit einer bestimmten granulometrischen Struktur bzw. mit bestimmten Durchmessern verwendet. Das setzt eine zusätzliche Aussiebung von Perlen mit Durchmessern bzw. Korngrößen von über 1,5 mm [siehe z. B., Chem.- Ing.Techn., 1996, v68, NR.10, p. 1200] sowie die Reinigung der als Endkörner bezeichenbaren Perlen von staubförmigen Rückständen voraus. Dies ist durch das Vorhandensein des TM erschwert.

In einem durch US 5000801 bekannten Verfahren zur Herstellung von Perlen bzw. Körnern aus EPS mit enger granulometrischen Verteilung werden durch ein Suspensionsverfahren hergestellte Perlen aus EPS mit einem nukleatierenden Mittel in einem Kneter gemischt. Die Perlen enthalten einen Massenanteil von 5,9 - 7,5 % TM. Das nukleatierende Mittel ist eine Mischung aus Zitronensäure und Soda in einem Verhältnis von 0,25 bis 0,4 g je Kilogramm EPS.

Dieses Gemisch wird in eine Spritzmaschine befördert. Das Polymer wird geschmolzen. Polymerstränge werden bei einer Temperatur von 115-125°C und einem Druck von 12402-13780 kPa (1800-2000 Pfund/Zoll$^2$) unter Bedingungen, die einer Schaumbildung vorbeugen, extrudiert. Diese Bedingungen umfassen ein Wasserbad mit einer Wassertemperatur von ca. 22° C (15-30° C), in welches die extrudierten Fäden mit einer um das 1,8-fache höheren Geschwindigkeit als die der Extrusionsgeschwindigkeit, gezogen werden. Die gestreckten Fäden aus TM enthaltendem Polystyrol werden auf die gewünschte Korngröße geschnitten.

Ein wesentlicher Nachteil dieses Verfahrens besteht darin, dass hierzu Polystyrol mit einer molekularen Masse ($M_w$) von weniger als 200000, genauer von 90000-150000, und mit einer Schmelzfliessindex (MFI) des Schmelzguts von 4,5-5,0, verwendet wird. Ein weiterer Nachteil ist, dass das Ausgangspolymer keine Additive, wie etwa Antistatikmittel, Gleitmittel, welche der Klumpenbildung von Tropfen vorbeugen, usw. enthalten darf. Dies schränkt die Anwendung des Verfahrens ein.

Bei einem aus EP 0668139 A1 bekannten Verfahren zum Herstellen von expandierfähigem Styrolkunststoff-Granulat gemäß dem Oberbegriff des Anspruchs 1, werden ein Materialfluss von Polystyrol und TM in eine Mischzone gefördert. Das TM wird in der Polymerschmelze unter intensiver Schneidmischung in einem ersten statischen Mischapparat dispergiert. Das so gebildete Gemisch wird unter intensiver Schneidmischung in einem zweiten statischen Mischer gehalten. Dieses Gemisch wird beim Mischen in einem dritten statischen Mischer bis zu einer Zwischentemperatur unter nachfolgender Kühlung des Gemischs bis zu einer zur Granulation erforderlichen Temperatur abgekühlt. Polymerstränge werden unter schockartiger Abkühlung durch eine Düse ausgepresst und in Granulat zerschnitten. Gemäß diesem Verfahren kann das Schmelzgut aus Polymer sowohl aus der Spritzmaschine, als auch aus einer Anlage, welche das Polystyrol durch Polymerisation in Masse produziert, in den statischen Mischer gefördert werden. Das Halten der Mischung fördert bei der Schneidmischung die Diffusion des TM im Polymerschmelz. In der Abkühlungsstufe wird das Schmelzgut ungefähr bis zu einer Temperatur von 120° C abgekühlt. Dabei fällt der Druck ungefähr bis auf 10 Mpa ab. An der Düse fällt der Druck bis zu 1 MPa ab. Die Polymerstränge werden in ein Wasserbad ausgepresst, dessen Temperatur bei ca. 10° C aufrechterhalten wird. Es entsteht das Granulat aus EPS, welches eine gleichmäßige Verteilung von TM und gleichmäßige Größe hat.

Der Nachteil dieses bekannten Verfahrens besteht darin, dass es nur für Polymere einer Sorte geeignet ist, d. h. nur Polymere mit einer innerhalb eines engen Bereichs liegenden molekularen Masse zur Weiterverarbeitung zu einem EPS vorsieht.

Eine Aufgabe der Erfindung ist es, ein expandierfähiges Polystyrol mit einer in einem weiten Bereich liegenden bzw. auswählbaren oder veränderbaren molekularen Masse aus einer breiten Palette von Polystyrolsorten zu einem Granulat zu verarbeiten. Eine Aufgabe der Erfindung ist auch die Herstellung von Polystyrol mit breiter Verwendbarkeit.

Die Aufgabe wird erfindungsgemäß gelöst durch ein Verfahren zum Herstellen von expandierfähigem Styrolkunststoff-Granulat, gemäß Anspruchs 1.

Erfindungsgemäß kann der Schmelzmaterialfluss aus einem Entgaser einer vorzugsweise kontinuierlich arbeitenden Anlage zur Herstellung von Polymer durch Massenpolymerisation gespeist werden. Das Polymer kann auch in einer oder mehreren selbständigen Spritzmaschinen geschmolzen werden, wobei dieses Schmelzgut zum Mischen in den statischen Mischer gefördert werden kann.

Als Polymere kann Polystyrol mit einer molekularen Masse $M_w$ von 90000 bis etwa 400000 verwendet werden. Ebenso kann ein mit Kautschuk modifiziertes schlagfestes Polystyrol mit einer $M_w$ der Polystyrolmatrix von 150000 bis 300000 verwendet werden. Beim erfindungsgemäßen Verfahren kann der Kautschuk-Gehalt, etwa von Polybutadien, wie beispielsweise Styrolbutadienblockpolymere, im Polymer 5 bis 8 % der Masse betragen.

Erfindungsgemäß können als TM Grenzkohlenwasserstoffe mit einer Kettenlänge von $C_4$ - $C_6$ verwendet werden. Solche Grenzkohlenwasserstoffe sind beispielsweise Butan, Isobutan, Pentan, Isopentan oder Hexan. Vorzugsweise finden Pentan und Isopentan oder Mischungen hiervon Verwendung als TM.

In die Mischzone können zur Konfektion verschiedene Zuschläge chargenweise oder kontinuierlich eingebracht werden. Solche Zuschläge können beispielsweise eine Zersetzung durch Wärme und/oder Lichteinwirkung beeinflussende Stabilisatoren, Feuerschutzmittel in Form von die Brenn- oder Entflammbarkeit hemmenden Zuschlägen, Plastifizierungsmittel bzw. Gleitmittel, strukturbildende Zusatzmittel, so genannte Nukleatoren, oder Farbmittel sein.

Als zur Zersetzung durch Wärme und/oder Lichteinwirkung beeinflussende Stabilisatoren können solche verwendet werden, die mit Polystyrol zusammenarbeiten. Solche geeignete Stabilisatoren sind beispielsweise Pentaerythritäther β-(3,5-Ditretbutyl-4-Hydroxyphenyl) der Propionsäure (Irganox 1010 der schweizerischen Firma Ciba Speciality Chem.), 2,4-Bis-(4-Oktiltio)-6-(4-Hydroxy-3,5-Ditretbutilanilin)- 1,3,5- Triazin (Irganox 565 der Firma Ciba Speciality Chem.), eine Mischung von Tris-(2,4-Ditretbutylphenyl) Phosphit und von Oktadezyl-3-(3',5"- Ditretbutyl-4'-Hydroxyphenyl) Propionat im Verhältnis von 4:1 (Irganox B-900 der Firma Ciba Speciality Chem.) oder vergleichbare Substanzen.

Als die Brenn- oder Entflammbarkeit hemmende Feuerschutzmittel können halogenierte Kohlenwasserstoffe, wie etwa Tetrabrombisphenol A (BE51 der amerikanischen Firma Great Lakes), Hexabromzyklododekan (SD75 und SD75R derselben Firma) oder vergleichbare Substanzen in die Mischzone eingebracht werden.

Als Plastifizierungsmittel bzw. Gleitmittel kann Wachs verschiedener Art eingesetzt werden.

Als strukturbildende Zusatzmittel bzw. Nukleatoren können beispielsweise Talk, Aluminiumoxid, Magnesiumhydroxid, Hydrozerol, ein Gemisch von Natriumhydrogenkarbonat und Zitronensäure und dergleichen eingeführt werden.

Farbmittel, vorzugsweise in Form von fettlöslichen Farbstoffen und/oder Phthalozyaninfarbstoffen, können in Form von Konzentraten eingebracht werden.

Die Zusatzmittel bzw. Zuschläge werden in die Mischzone eingebracht und verteilen sich unter intensiver Schneidmischung gleichmäßig im geschmolzenen Polymer bzw. Polymerschmelz zusammen mit dem TM.

Die Düsen, durch welche aus dem Schmelzgut die Polymerstränge ausgepresst werden, weisen vorzugsweise Öffnungen mit einem Durchmesser von 0,7 bis 2,0 mm auf. Der Durchmesser der Öffnungen der Düsen wird vorzugsweise auf solche Weise eingestellt, dass das Granulat des EPS eine beinahe kugelförmige Form mit einem für einen bestimmten Anwendungszweck erforderlichen Durchmesser aufweist.

Die schockartige Abkühlung der Polymerstränge erfolgt vorzugsweise dadurch, dass die Polymerstränge in ein Wasserbad ausgepresst werden.

**Ausführungsbeispiele der Erfindung**

Nachfolgend ist das Verfahren anhand von Ausführungsbeispielen beschrieben. Das Verfahren ist jedoch nicht auf diese Ausführungsbeispiele beschränkt.

Beispiel 1

Schmelzgut eines Allzweck-Polystyrols, welches ein Verhältnis MFI/$M_w$ von $0.8 \cdot 10^{-5}$ (MFI=3,0 g/10 Minunten, $M_w$=375000) aufweist, wird mit einer Temperatur von $210^0$ C und einer Geschwindigkeit Gp=1330 kg/Stunde in eine Kaskade stufenweise nacheinander angeordneter statischer Mischer gefördert. Gleichzeitig werden in dieselbe Kaskade ein Treibmittelfluss mit einer Geschwindigkeit $G_{BA}$=70 Kilo/Stunde sowie 0, 1 % Massenanteil Talk gefördert. Bei dem TM handelt es sich um Pentan. Das Verhältnis Gp /$G_{BA}$ beträgt 19,0, der maximal mögliche Treibmittelfluss $G_{BAmax}$ für die Kaskade beträgt $G_{BAmax}$=98 Kilo/Stunde.

Die Temperatur während der intensiven Schneidmischung im ersten statischen Mischer beträgt

$$\left[ 200 + 56 \cdot \left( 1 - \frac{G_{BAmoment.}}{G_{BA\,max}} \right) \right]^o C .$$

Im zweiten und dritten Mischer werden folgende Temperaturen aufrechterhalten:

$$\left[ 175 + 70 \cdot \left( 1 - \frac{G_{BAmoment.}}{G_{BA\,max}} \right) \right]^o C$$

im zweiten und

$$\left[ 150 + 70 \cdot \left( 1 - \frac{G_{BAmoment.}}{G_{BA\,max}} \right) \right]^o C$$

im dritten statischen Mischer.

Dann wird das Gemisch in eine zweite Abkühlungsstufe gefördert, wo es bis auf eine Temperatur von 120° C abgekühlt wird.

Die Polymerstränge werden durch eine Düse mit Öffnungen mit einem Durchmesser von 0,7-0,9 mm in ein Wasserbad mit einer Wassertemperatur von 10±1° C ausgepresst und granuliert. Für das Wasserbad eignet sich beispielsweise Steigbrunnenwasser.

Das fertige Granulat mit einem Durchmesser von 0,7-0,9 mm und mit einem Pentangehalt von 5,0 % Masseanteil wird zur Vorschaumbildung weitergeleitet.

Bei der Wahl der Bedingungen der Vorschaumbildung ist maßgebend, welcher Bereich der Schüttdichte des Schaumerzeugnisses hergestellt werden soll.

Nach der Vorschaumbildung wird das Granulat unter Normalbedingungen für 24 Stunden ruhen gelassen.

**EP 1 857 242 B1**

Durch ein auch als Thermosinterung bezeichnetes Verfahren werden Probestücke aus Schaumpolystyrol mit einer Größe von (50±2) x (50±2) x (40±2) cm durch Warmformen hergestellt. Die Ergebnisse der an diesen Probestücken bestimmten Schüttdichte sind in der Tabelle weiter unten zusammengefasst.

Beispiel 2

Der Versuch wurde wie im Beispiel 1 durchgeführt, wobei jedoch Polystyrol mit einem Verhältnis MFI/$M_w$ = 1,93·$10^{-5}$ (FZS =5,6 g/10 Minuten, $M_w$ =290000) verwendet wurde. In das Schmelzgut wurde neben einem Massenanteil von 1,0 % Pentan zusätzlich ein Massenanteil von 0,1 % Hexabromzyklododekan, ein Massenanteil von 0,05% eines Thermostabilisators Irganox B-900, ein Massenanteil von 0,05 % eines Farbmittels und ein Massenanteil von 0,1 % Talks eingebracht. Das Verhältnis Gp /$G_{BA}$ beträgt 17,2. Bei dem Farbmittel handelt es sich um hellgrüne Phthalozyaninpigmente.
Die Temperaturen in den statischen Mischern und die Ergebnisse der Versuche sind in der Tabelle weiter unten zusammengefasst.

Beispiel 3

Der Versuch wurde wie im Beispiel 2 durchgeführt, wobei jedoch ein Verhältnis MFI/$M_w$ = 2.96·$10^{-5}$ (MFI=7,4 g/10 Minuten, $M_w$ =250000) gewählt wurde. Außerdem betrug das Verhältnis Gp /$G_{BA}$ 14,4. Der Massenanteil von Pentan im fertigen EPS betrug 6,5 %.
Die Temperaturen in den statischen Mischern und die Ergebnisse der Versuche sind in der Tabelle weiter unten angeführt.

Beispiel 4

Der Versuch wurde wie im Beispiel 2 durchgeführt, wobei als Treibmittel ein Gemisch aus Pentan und Isopentan im Verhältnis 7:3 verwendet wurde. Außerdem wurde Polystyrol mit einem Verhältnis MFI/$M_w$ = 4,49·$10^{-5}$ (MFI=9,2 g/10 Minuten, $M_w$ = 205000) verwendet. Das Verhältnis Gp /$G_{BA}$ = 13,4 wurde beibehalten. Die Polymerstränge wurden durch eine Düse mit Öffnungen mit einem Durchmesser von 0,9-1,4 mm ausgepresst. Das so hergestellte Erzeugnis enthält einen Massenanteil von 6,9 % an Treibmittel. Bei der Verarbeitung ist eine doppelte Vorschaumbildung zulässig.
Die Temperaturen in den statischen Mischern und die Ergebnisse der Versuche sind in der Tabelle weiter unten zusammengefasst.

Beispiel 5

Der Versuch wurde wie im Beispiel 2 durchgeführt, wobei ein Allzweck-Polystyrol mit einem Verhältnis MFI/$M_W$ = 6,82·$10^{-5}$ (MFI=12,0 g/10 Minuten, $M_w$ =176000) verwendet wurde. Das Verhältnis Gp /$G_{BA}$ = 15,1 wurde aufrechterhalten. Die Polymerstränge wurden durch eine Düse mit Öffnungen mit einem Durchmesser von 0,9-1,4 mm ausgepresst. Das Erzeugnis enthält einen Massenanteil von 6,2 % Treibmittel.
Die Temperaturen in den statischen Mischern und die Ergebnisse der Versuche sind in der Tabelle weiter unten zusammengefasst.

Beispiel 6

Der Versuch wurde wie im Beispiel 4 durchgeführt, wobei Polystyrol mit MFI/$M_w$ = 12,0·$10^{-5}$ (MFI=18,0 g/10 Minuten, $M_w$ =150000) verwendet und ein Verhältnis $G_p$ /$G_{BA}$ = 13,3 aufrechterhalten wurde. Das Erzeugnis enthält einen Massenanteil von 7,0 % Treibmittel.
Die Temperaturen in den statischen Mischern und die Ergebnisse der Versuche sind in der Tabelle weiter unten angeführt.

Beispiel 7

Der Versuch wurde wie im Beispiel 4 durchgeführt, wobei Polystyrol mit MFI /$M_w$ = 8,75·$10^{-5}$ (MFI=14,0 g/10 Minuten, $M_w$ = 160000) verwendet wurde. Ein Verhältnis Gp /$G_{BA}$ = 14,4 wurde aufrechterhalten. Das Erzeugnis enthält einen Massenanteil von 6,5 % Treibmittel.
Die Temperaturen in den statischen Mischern und die Ergebnisse der Versuche sind in der Tabelle weiter unten zusammengefasst.

Beispiel 8

Der Versuch wurde wie im Beispiel 2 durchgeführt, wobei ein schlagfestes Polystyrol, welches einen Massenanteil von 6,5 % Butadienkautschuk enthält, verwendet wurde. $M_w$ der Polystyrolmatrix ist 260000. MFI des Polymers beträgt 5,8 g/10 Minuten. Das Verhältnis MFI/$M_w$ ist FZS/$M_w$ = 2,23 · 10$^{-5}$. Das Verhältnis Gp /$G_{BA}$= 14,4 wird aufrechterhalten. Das Erzeugnis enthält einen Massenanteil von 6,5 % Treibmittel.

Die Temperaturen in den statischen Mischern und die Ergebnisse der Versuche sind in der Tabelle weiter unten zusammengefasst.

**Bedingungen während der Herstellung sowie Eigenschaften der fertigen Erzeugnisse**

| Nr. | MF/Mw·10$^{-5}$ | $G_p$/$G_{BA}$ | Temperatur °C, in den statischen Mischern | | | TM-Gehalt im Fertigerzeugnis, % (massenmäßig) | Korngröße | Schüttdichte des Erzeugnisses kg/m3 |
|---|---|---|---|---|---|---|---|---|
| | | | Im ersten | Im zweiten | Im dritten | | | |
| 1. | 0,80 | 19,0 | 216 | 195 | 175 | 5,0 | 0,7-0,9 | 30-55 |
| 2. | 1,93 | 17,2 | 212 | 190 | 165 | 5,5 | 0,7-0,9 | 25-45 |
| 3. | 2,96 | 14,4 | 204,5 | 181 | 156 | 6,5 | 1,4-2,0 | 15-35 |
| 4. | 4,49 | 13,4 | 201 | 176 | 151 | 6,9 | 0,9-1,4 | 12-25 |
| 5. | 6,82 | 15,1 | 206 | 183 | 158 | 6,2 | 0,9-1,4 | 25-35 |
| 6. | 12,0 | 13,3 | 200 | 175 | 150 | 7,0 | 1,4-2,0 | 15-25 |
| 7. | 8,75 | 14,4 | 204,5 | 181 | 156 | 6,5 | 0,9-1,4 | 16-35 |
| 8. | 2,23 | 14,4 | 204,5 | 181 | 156 | 6,5 | 0,7-0,9 | 25-40 |

Wie aus der Tabelle ersichtlich, kann durch das erfindungsgemäße Verfahren Polystyrol mit einer molekularen Masse und einer Schmelzfliessindex (MFI) aus einem weiten Bereich zu einem expandierfähigen Erzeugnis verarbeitet werden. So kann auch schlagfestes Polystyrol verarbeitet werden. Außerdem ermöglicht das erfindungsgemäße Verfahren eine Herstellung von Erzeugnissen, welche in Abhängigkeit von den Bedingungen bei der Vorschaumbildung und beim Warmformen des Schaumpolystyrols einen weiten Bereich der Schüttdichte aufweist.

Die Erfindung kann in der chemischen Industrie, insbesondere bei der Herstellung von Polystyrolkunststoffen verwendet werden. Die Erfindung kann auch zur Herstellung von Schaumpolystyrol für Bau- und Wärmeisolationszwecke, sowie zur Herstellung von Verpackungsmitteln verschiedener Gebrauchszwecke eingesetzt werden.

**Patentansprüche**

**1.** Verfahren zum Herstellen von expandierfähigem Styrolkunststoff-Granulat durch Zufuhr von geschmolzenem Polymer in einem Schmelzmaterialfluss und Zufuhr von Treibmittel in einem Treibmittelfluss in eine Mischzone, Dispergierung des Treibmittels im geschmolzenen Polymer unter intensiver Schneidmischung in einem ersten statischen Mischer, Halten des gebildeten Gemisches unter intensiver Schneidmischung in einem zweiten statischen Mischer, Abkühlung des Gemischs unter Mischen in einem dritten statischen Mischer bis zu einer Zwischentemperatur unter nachfolgender Abkühlung des Gemisches bis zu einer zur Granulatbildung erforderlichen Temperatur, sowie Auspressen von Polymerstränge unter schockartiger Abkühlung und damit einhergehender Granulation, **dadurch gekennzeichnet,** **dass** ein Gewichtsverhältnis zwischen dem Schmelzmaterialfluss Gp und dem Treibmittelfluss $G_{BA}$ in einem Bereich von 13 bis 19 eingehalten wird und die Temperatur im ersten statischen Mischer von 200 bis 216°C, im zweiten statischen Mischer von 175 bis 195°C, und im dritten statischen Mischer von 150 bis 175°C beträgt, wobei ein Verhältnis der Schmelzfliessindex MFI des geschmolzenen Polymers zu seiner mittleren molekularen Masse $M_w$ in einem Bereich von (0,8 bis 12,0)x 10$^{-5}$ eingehalten wird.

**2.** Verfahren nach Anspruch 1,
**dadurch gekennzeichnet,**
**dass** als Styrolpolymer ein Homopolystyrol eingesetzt wird.

**3.** Verfahren nach Anspruch 1,
**dadurch gekennzeichnet,**
**dass** als Styrolpolymer ein schlagfestes Polystyrol verwendet ist.

**4.** Verfahren nach Anspruch 1,
**dadurch gekennzeichnet,**
**dass** als Treibmittel Pentan und/oder Isopentan und/oder Mischungen hieraus eingesetzt werden.

**5.** Verfahren nach einem der vorhergehenden Ansprüche,
**dadurch gekennzeichnet,**
**dass** zur Konfektion des expandierfähigen Styrolkunststoff-Granulats in die Mischzone Zuschläge chargenweise oder kontinuierlich eingebracht werden.

**6.** Verfahren nach Anspruch 5,
**dadurch gekennzeichnet,**
**dass** es sich bei den Zuschlägen um eine Zersetzung durch Wärme und/oder Lichteinwirkung beeinflussende Stabilisatoren und/oder Feuerschutzmittel in Form von die Brenn- oder Entflammbarkeit hemmenden Zuschlägen und/oder Plastifizierungsmittel bzw. Gleitmittel und/oder strukturbildende Zusatzmittel und/oder Farbmittel handelt.

**7.** Verfahren nach einem der vorhergehenden Ansprüche,
**dadurch gekennzeichnet,**
**dass** die Polymerstränge durch Düsen aus dem Schmelzgut ausgepresst werden, welche Öffnungen aufweisen, deren Durchmesser auf solche Weise eingestellt ist, dass das Granulat eine zumindest annähernd kugelförmige Form mit einem für einen bestimmten Anwendungszweck erforderlichen Durchmesser aufweist.

**8.** Verfahren nach Anspruch 7,
**dadurch gekennzeichnet,**
**dass** die Düsen Öffnungen mit einem Durchmesser von 0,7 bis 2,0 mm aufweisen.

**9.** Verfahren nach einem der vorhergehenden Ansprüche,
**dadurch gekennzeichnet,**
**dass** die schockartige Abkühlung der Polymerstränge dadurch erfolgt, dass die Polymerstränge in ein Wasserbad ausgepresst werden.

**10.** Verfahren nach einem der vorhergehenden Ansprüche,
**dadurch gekennzeichnet,**
**dass** die Abkühlung des Gemisches des dritten statischen Mischers bis zu einer zur Granulatbildung erforderlichen Temperatur in einer zweiten Abkühlungsstufe erfolgt, in welche das Gemisch aus dem dritten statischen Mischer gefördert wird.

**11.** Verfahren nach Anspruch 10,
**dadurch gekennzeichnet,**
**dass** die zur Granulatbildung erforderliche Temperatur 110° - 130° C beträgt.

**Claims**

**1.** A method for the production of expandable polystyrene granules by supplying a material melt flow including a polymer melt and by supplying an expanding agent flow including an expanding agent into a mixing zone,
dispersing the expanding agent in the polymer melt during vigorous shear mixing in a first static mixer,
holding the formed mixture during vigorous shear mixing in a second static mixer,
cooling the mixture during mixing in a third static mixer to an intermediate temperature during subsequent cooling of the mixture down to a temperature required for granulation,
as well as pressing out polymer filaments during shock cooling and a thereby related granulation,

**characterised in that**

a weight ratio between the material melt flow $G_P$ and the expanding agent flow $G_{BA}$ is maintained within a range from 13 to 19,

and **in that** the temperature in the first static mixer amounts to between 200 and 216°C, the temperature in the second static mixer amounts to between 175 and 195°C, and the temperature in the third static mixer amounts to between 150 and 175°C,

wherein a ratio of the melt flow index MFI of the polymer melt to its average molecular mass Mw is maintained within a range of $(0.8$ to $12.0)$x $10^{-5}$.

2. A method in accordance with claim 1,
**characterised in that**
a homopolystyrene is used as styrene polymer.

3. A method in accordance with claim 1,
**characterised in that**
an impact-resistant polystyrene is used as styrene polymer.

4. A method in accordance with claim 1,
**characterised in that**
a pentane and/or an isopentane and/or mixtures thereof is/are used as an expanding agent.

5. A method in accordance with any one of the preceding claims,
**characterised in that**
additives are introduced into the mixing zone in batches or continuously for the manufacture of the expandable polystyrene granules.

6. A method in accordance with claim 5,
**characterised in that**
the additives are stabilisers which affect a degradation by heat and/or by exposure to light; and/or fire prevention agents in the form of additives which inhibit the combustibility or the flammability; and/or plasticisers and/or lubricants; and/or structure forming additives; and/ or colourants.

7. A method in accordance with any one of the preceding claims,
**characterised in that**
the polymer filaments are pressed out of the melt via nozzles, which include openings whose diameter is configured in such a manner that the granules include an at least approximately spherical shape having a diameter which is necessary for a specific purpose.

8. A method in accordance with claim 7,
**characterised in that**
the openings of the nozzles include a diameter of 0.7 to 2.0 mm.

9. A method in accordance with any one of the preceding claims,
**characterised in that**
the shock cooling of the polymer filaments takes place **in that** the polymer filaments are pressed out in a water bath.

10. A method in accordance with any one of the preceding claims,
**characterised in that**
the cooling of the mixture of the third static mixer to a temperature required for granulation takes place in a second cooling stage, during which the mixture is conveyed from the third static mixer.

11. A method in accordance with claim 10,
**characterised in that**
the temperature required for granulation amounts to between 110° and 130° C.

**Revendications**

1. Procédé de fabrication de granules d'un polymère styrène moussant par apport de polymère fondu sous la forme d'un flux de matière fondue et d'un agent moussant sous la forme d'un flux d'agent moussant, dans une zone de mélange, dispersion de l'agent moussant dans le polymère fondu par division intense dans un premier mélangeur statique, maintien du mélange obtenu dans un deuxième mélangeur statique sous division intense, refroidissement du mélange dans un troisième mélangeur statique sous division jusqu'à une température intermédiaire et refroidissement suivant du mélange jusqu'à une température nécessaire pour la formation de granules, ainsi qu'extrusion de joncs de polymère sous refroidissement choc et formation résultante de granules,
**caractérisé en ce qu'**un rapport de poids entre le flux de matière fondue $G_P$ et le flux d'agent moussant $G_{BA}$ dans une plage de 13 à 19 est maintenu et que la température est maintenue dans le premier mélangeur statique de 200 à 216 °C, dans le deuxième mélangeur statique de 175 à 195 °C et dans le troisième mélangeur statique de 150 à 175 °C,
un rapport entre l'indice de flux de matière fondue MFI du polymère fondu et sa masse moléculaire moyenne ($M_w$) étant maintenu dans une plage de (0,8 à 12,0) x $10^{-5}$.

2. Procédé selon la revendication 1, **caractérisé en ce que** l'on utilise comme polymère styrène un homopolystyrène.

3. Procédé selon la revendication 1, **caractérisé en ce que** l'on utilise comme polymère styrène un polystyrène résistant aux chocs.

4. Procédé selon la revendication 1, **caractérisé en ce que** l'on utilise comme agent moussant du pentane ou de l'isopentane ou des mélanges de ceux-ci.

5. Procédé selon l'une des revendications précédentes, **caractérisé en ce que**, pour confectionner les granules de matière polymère moussante, des additifs sont apportés par charges ou en continu.

6. Procédé selon la revendication 5, **caractérisé en ce que** les additifs sont des stabilisants ayant une influence sur la décomposition par la chaleur ou par la lumière et/ou des agents anti-feu sous la forme d'additifs réduisant la combustibilité ou l'inflammabilité et/ou des agents plastifiants ou lubrifiants et/ou des additifs formant une structure et/ou des colorants.

7. Procédé selon l'une des revendications précédentes, **caractérisé en ce que** les joncs de polymère sont extrudés de la matière fondue par des buses ayant des ouvertures dont le diamètre est réglé de façon que les granules présentent une forme au moins approximativement sphérique avec un diamètre nécessaire pour une application particulière.

8. Procédé selon la revendication 7, **caractérisé en ce que** les buses ont des ouvertures ayant un diamètre de 0,7 à 2,0 mm.

9. Procédé selon l'une des revendications précédentes, **caractérisé en ce que** le refroidissement choc est réalisé par extrusion des joncs de polymère dans un bain d'eau.

10. Procédé selon l'une des revendications précédentes, **caractérisé en ce que** le refroidissement du mélange du troisième mélangeur statique jusqu'à une température nécessaire pour la formation de granules est effectué dans un deuxième étage de refroidissement vers lequel le mélange est transporté à partir du troisième mélangeur statique.

11. Procédé selon la revendication 10, **caractérisé en ce que** la température nécessaire pour la formation de granules est de 110 à 130 °C.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0445847 A2
- JP 491141 A
- US 5240967 A
- RU 2087486 C1
- FR 2725995 A1
- US 5616413 A
- DE 19548311 A1
- DE 19642658 A1
- FR 2820427 A1
- US 5000801 A
- EP 0668139 A1